(19) Europäisches Patentamt
European Patent Office
Office européen des brevets

(11) Veröffentlichungsnummer : **0 106 105**
**B1**

(12) # EUROPÄISCHE PATENTSCHRIFT

(45) Veröffentlichungstag der Patentschrift : **21.11.85**

(51) Int. Cl.⁴ : **A 01 N 43/64** // (A01N43/64, 43:64)

(21) Anmeldenummer : **83108718.4**

(22) Anmeldetag : **05.09.83**

(54) **Fungizide Mittel.**

(30) Priorität : **18.09.82 DE 3234625**

(43) Veröffentlichungstag der Anmeldung : **25.04.84 Patentblatt 84/17**

(45) Bekanntmachung des Hinweises auf die Patenterteilung : **21.11.85 Patentblatt 85/47**

(84) Benannte Vertragsstaaten : **AT BE CH DE FR GB IT LI NL SE**

(56) Entgegenhaltungen : **DE-A- 3 116 607**

(73) Patentinhaber : **BAYER AG
Konzernverwaltung RP Patentabteilung
D-5090 Leverkusen 1 Bayerwerk (DE)**

(72) Erfinder : **Brandes, Wilhelm, Dr.
Eichendorffstrasse 3
D-5653 Leichlingen (DE)**
Erfinder : **Kaspers, Helmut, Dr.
Steglitzer Strasse 4
D-5090 Leverkusen (DE)**
Erfinder : **Reinecke, Paul, Dr.
Lessingstrasse 11
D-5090 Leverkusen 3 (DE)**
Erfinder : **Scheinpflug, Hans, Dr.
Am Thelenhof 15
D-5090 Leverkusen (DE)**
Erfinder : **Krämer, Wolfgang, Dr.
Am Eckbusch 39/45
D-5600 Wuppertal 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft neue fungizide synergistische Wirkstoffkombinationen aus (a) dem bekannten 1-(4-Phenyl-phenoxy)-1-(1,2,4-triazol-1-yl)-3,3-dimethyl-butan-2-ol und (b) bestimmten anderen bekannten fungizid wirksamen Derivaten des 1,2,4-Triazols.

Es ist bereits allgemein bekannt, daß Mischungen enthaltend 1,2,4-Triazol-Derivate, wie z. B. das 1-(4-Chlor-phenoxy)-3,3-dimethyl-1-(1,2,4-triazol-1-yl)-2-butanon, in Kombination mit anderen bekannten Fungiziden eine beachtlich höhere Wirkung als die Einzelkomponenten aufweisen (vgl. z. B. die Deutsche Offenlegungsschrift 25 52 967). Die Wirksamkeit dieser Wirkstoffmischungen ist jedoch nicht immer auf allen Anwendungsgebieten voll befriedigend.

Es wurde nun gefunden, daß neue spezielle Wirkstoffkombinationen aus

(a) 1-(4-Phenyl-phenoxy)-1-(1,2,4-triazol-1-yl)-3,3-dimethyl-butan-2-ol der Formel

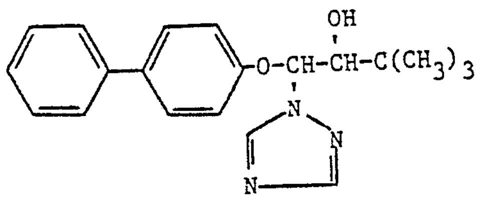

(I)

und

(b) anderen fungizid wirksamen Derivaten des 1,2,4-Triazols mit der Formel

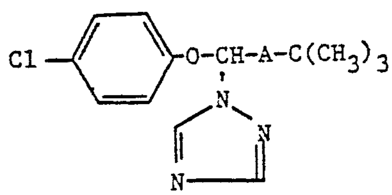

(II)

in welcher A für die Keto- oder die CH(OH)-Gruppe steht,
eine besonders hohe fungizide Wirksamkeit aufweisen.

Überraschenderweise ist die fungizide Wirkung der erfindungsgemäßen Wirkstoffkombinationen wesentlich höher als die Wirkung der Einzelkomponenten und auch als die Summe der Einzelkomponenten (synergistischer Effekt). Insbesondere war es für den Fachmann nicht vorhersehbar, daß eine den Wirkstoff der Formel (I) und Wirkstoffe der Formel (II) mit sehr ähnlicher Struktur enthaltende Mischung einen synergistischen Effekt aufweist. Die Auffindung dieser speziellen Kombination stellt eine wertvolle Bereicherung der Technik dar.

Die für die spezielle erfindungsgemäße Kombination zu verwendenden Wirkstoffe sind durch die obigen Formeln (I) und (II) definiert. Es handelt sich um die folgenden Verbindungen :

(I) : Kurzbezeichnung BITERTANOL
(IIa) : A = CO ; Kurzbezeichnung TRIADIMEFON
(IIb) : A = CH(OH) ; Kurzbezeichnung TRIADIMENOL

Die genannten Verbindungen sind allgemein bekannt (vgl. hierzu die Deutschen Patentschriften 22 01 063 und 23 24 010 bzw. die entsprechenden US-Patentschriften 3 912 752 und 3 952 002).

Zu einer Wirkstoffkombination aus dem Wirkstoff der Formel (I) und den Wirkstoffen der Formel (II) können noch weitere Wirkstoffe (z. B. als Drittkomponente) hinzukommen.

Die Gewichtsverhältnisse der Wirkstoffgruppen in den Wirkstoffkombinationen können in relativ großen Bereichen schwanken. Im allgemeinen entfallen auf 1 Gew.-Teil an Wirkstoff der Formel (I) 0,001 bis 50 Gew.-Teile Wirkstoff der Formel (II), vorzugsweise 0,01 bis 20 Gew.-Teile des letzteren, besonders bevorzugt 0,1 bis 10 Gew.-Teile.

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und

können angewandt werden gegen parasitäre Pilze, die oberirdische Pflanzenteile befallen oder die Pflanzen vom Boden her angreifen, sowie samenübertragbare Krankheitserreger. Besonders praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia-, Urocystis-, Ustilago-, Septoria-, Typhula-, Rhynchosporium-, Helminthosporium- und Fusarium-Arten hervorgerufen werden. Durch die systemische Wirkung der Mischungspartner werden die Pflanzen auch oft längere Zeit nach der Beizung noch vor Krankheitserregern geschützt, die verschiedene Teile des Sprosses angreifen können, z. B. echte Mehltaupilze und Rostpilze. Die Wirkstoffkombinationen können daneben auch als Bodenbehandlungsmittel gegen phytopathogene Pilze eingesetzt werden und wirken gegen Wurzelfäulen und Tracheomykosen, die z. B. durch Krankheitserreger der Gattungen Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitseerreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae, Pellicularia sasakii.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweißhydrolysate ; als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurrenährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,000 1 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,000 01 bis 0,1 Gew.-%, vorzugsweise 0,000 1 bis 0,02 %, am Wirkungsort erforderlich.

Zur Erläuterung dienen die nachfolgenden Anwendungsbeispiele.

## Beispiel A

Venturia-Test (Apfel)/protektiv

Lösungsmittel : 4,7 Gewichtsteile Aceton
Emulgator : 0,3 Gewichtsteile Alkyl-aryl-polyglykol-ether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20 °C und 100 % relativer Luftfeuchtigkeit in einer Inkubationskabine.

Die Pflanzen werden dann im Gewächshaus bei 20 °C und einer relativen Luftfeuchtigkeit von ca. 70 % aufgestellt.

12 Tage nach der Inokulation erfolgt die Auswertung.

Tabelle A

Venturia-Test (Apfel)/protektiv

| Wirkstoff | Befall in % bei einer Wirkstoffkonzentration von | |
|---|---|---|
| BITERTANOL (I) (bekannt) | 0,0001 % | 62 |
| TRIADIMEFON (IIa) (bekannt) | 0,000012 % | 72 |
| Mischung aus (I) und (IIa) (Mischungsverhältnis 1:0,12) | 0,0001 % +0,000012 % | 30 |

## Beispiel B

Drechslera graminea-Test (Gerste)/Saatgutbehandlung (syn. Helminthosporium gramineum)

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von 4 °C aus. Dabei wird die Keimung der Gerste und gegebenenfalls auch der Pilzsporen eingeleitet. Anschließend sät man die vorgekeimte Gerste mit 2 × 50 Korn 3 cm tief in eine Standarderde und kultiviert sie im Gewächshaus bei einer Temperatur von ca. 18 °C in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

Tabelle B

Drechslera graminea-Test (Gerste)/Saatgutbehandlung (syn. Helminthosporium gramineum)

| Wirkstoff | Wirkstoff-aufwand-menge in mg / kg Saatgut | kranke Pflanzen in % der insgesamt aufgelaufenen Pflanzen |
|---|---|---|
| Ungebeizt | - | 28,8 |
| BITERTANOL (I) (bekannt) | 500 | 11,1 |
| TRIADIMENOL (IIb) (bekannt) | 200 | 12,3 |
| Mischung aus (I) und (IIb) (Mischungsverhältnis 2,5:1) | 500 +200 | 0,0 |

**Patentansprüche**

1. Fungizides Mittel, gekennzeichnet durch einen Gehalt an einer speziellen Wirkstoffkombination aus

(a) 1-(4-Phenyl-phenoxy)-1-(1,2,4-triazol-1-yl)-3,3-dimethyl-butan-2-ol der Formel

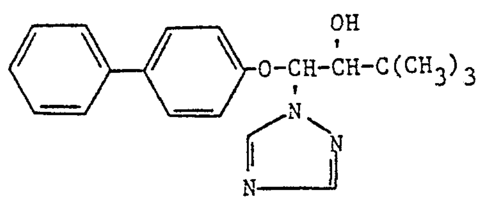

(I)

und

(b) anderen fungizid wirksamen Derivaten des 1,2,4-Triazols mit der Formel

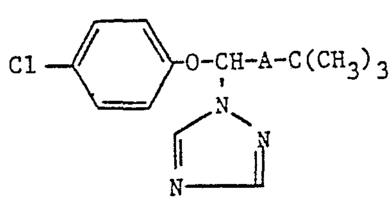

(II)

in welcher A für die Keto- oder die CH(OH)-Gruppe steht.

2. Fungizides Mittel gemäß Anspruch 1, gekennzeichnet durch einen Gehalt an einer Wirkstoffkombination aus (a) der Verbindung der Formel (I) und (b) der Verbindung der Formel

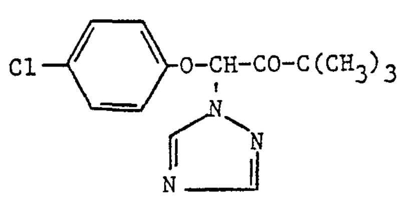

(IIa)

3. Fungizides Mittel gemäß Anspruch 1, gekennzeichnet durch einen Gehalt an einer Wirkstoffkombination aus (a) der Verbindung der Formel (I) und (b) der Verbindung der Formel

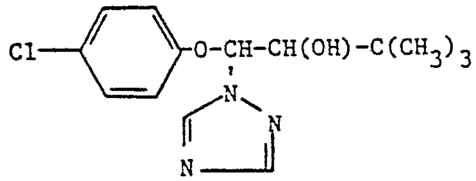

(IIb)

4. Fungizides Mittel gemäß Ansprüchen 1 bis 3, dadurch gekennzeichnet, daß in der Wirkstoffkombination das Gewichtsverhältnis von dem Wirkstoff der Formel (I) zu den Wirkstoffen der Formeln (II) zwischen 1 : 0,001 und 1 : 50 liegt.

5. Fungizides Mittel gemäß Ansprüchen 1 bis 4, dadurch gekennzeichnet, daß das Gewichtsverhältnis zwischen 1 : 0,01 und 1 : 20 liegt.

6. Fungizides Mittel gemäß Ansprüchen 1 bis 5, dadurch gekennzeichnet, daß das Gewichtsverhältnis zwischen 1 : 0,1 und 1 : 10 liegt.

7. Verfahren zur Bekämpfung von Pilzen, dadurch gekennzeichnet, daß man eine Wirkstoffkombination gemäß Ansprüchen 1 bis 3 auf Pilze oder deren Lebensraum einwirken läßt.

8. Verwendung von Wirkstoffkombinationen gemäß Ansprüchen 1 bis 3 als Pflanzenschutzmittel.

9. Verwendung von Wirkstoffkombinationen gemäß Ansprüchen 1 bis 3 zur Bekämpfung von Pilzen.

10. Verfahren zur Herstellung von fungiziden Mitteln, dadurch gekennzeichnet, daß man eine Wirkstoffkombination gemäß Ansprüchen 1 bis 3 mit Streckmitteln und/oder oberflächenaktiven Mitteln vermischt.

**Claims**

1. Fungicidal agent, characterised in that it contains a specific active compound combination of
(a) 1-(4-phenyl-phenoxy)-1-(1,2,4-triazol-1-yl)-3,3-dimethyl-butan-2-ol of the formula

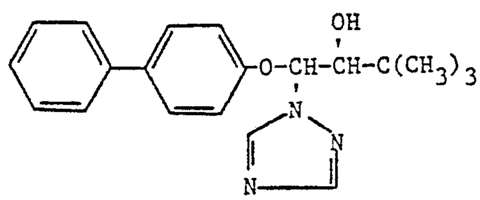

(I)

and
(b) other fungicidally active derivatives of 1,2,4-triazole having the formula

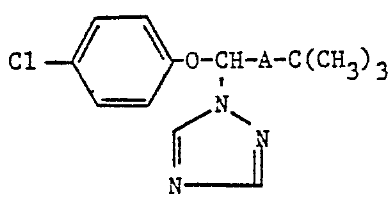

(II)

in which A represents the keto group or the CH(OH) group.

2. Fungicidal agent according to Claim 1, characterised in that it contains an active compound combination of (a) the compound of the formula (I) and (b) the compound of the formula

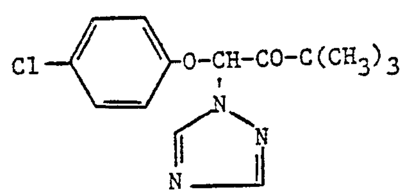

(IIa)

3. Fungicidal agent according to Claim 1, characterised in that it contains an active compound combination of (a) the compound of the formula (I) and (b) the compound of the formula

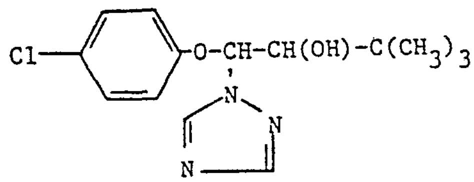

(IIb)

4. Fungicidal agent according to Claims 1 to 3, characterised in that the weight ratio of the active compound of the formula (I) to the active compounds of the formulae (II) in the active compound combination is between 1 : 0.001 and 1 : 50.

5. Fungicidal agent according to Claims 1 to 4, characterised in that the weight ratio is between 1 : 0.01 and 1 : 20.

6. Fungicidal agent according to Claims 1 to 5, characterised in that the weight ratio is between 1 : 0.1 and 1 : 10.

7. Method of combating fungi, characterised in that an active compound combination according to Claims 1 to 3 is allowed to act on fungi or their environment.

8. Use of active compound combinations according to Claims 1 to 3 as plant protection agents.

9. Use of active compound combinations according to Claims 1 to 3 for combating fungi.

10. Process for the preparation of fungicidal agents, characterised in that an active compound combination according to Claims 1 to 3 is mixed with extenders and/or surface-active agents.

**Revendications**

1. Fongicide, caractérisé par une teneur en une combinaison spéciale de substances actives, formée :

(a) du 1-(4-phényl-phénoxy)-1-(1,2,4-triazol-1-yl)-3,3-diméthyl-butane 2-ol de formule :

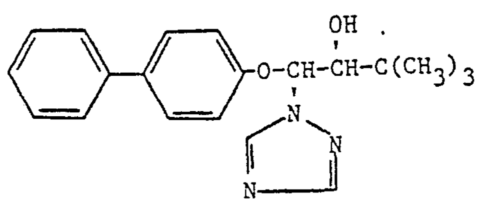

(I)

et

(b) d'autres dérivés, à activité fongicide, du 1,2,4-triazole de formule :

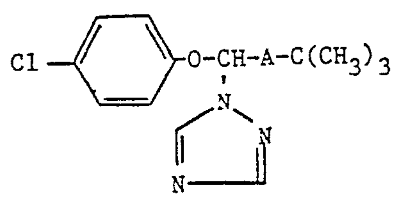

(II)

dans laquelle A représente le groupe cétonique ou le groupe CH(OH).

2. Fongicide selon la revendication 1, caractérisé en ce qu'il contient une combinaison de substances actives formée (a) du composé de formule (I) et (b) du composé de formule :

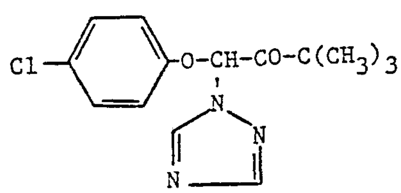

(IIa)

3. Fongicide selon la revendication 1, caractérisé en ce qu'il contient une combinaison de substances actives formée (a) du composé de formule (I) et (b) du composé de formule :

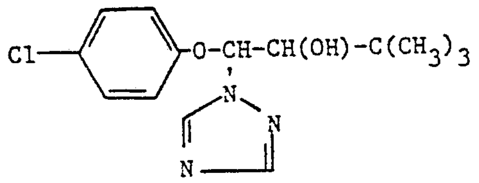 (IIb)

4. Fongicide selon les revendications 1 à 3, caractérisé en ce que, dans la combinaison des substances actives, la proportion pondérale de la substance active de formule (I) par rapport aux substances actives répondant aux formules (II) se situe entre 1 : 0,001 et 1 : 50.

5. Fongicide selon les revendications 1 à 4, caractérisé en ce que la proportion pondérale se situe entre 1 : 0,01 et 1 : 20.

6. Fongicide selon les revendications 1 à 5, caractérisé en ce que la proportion pondérale se situe entre 1 : 0,1 et 1 : 10.

7. Procédé pour combattre des champignons, caractérisés en ce qu'on fait agir une combinaison de substances actives selon les revendications 1 à 3, sur les champignons ou sur leur biotope.

8. Utilisation des combinaisons de substances actives selon les revendications 1 à 3 comme produits pour la protection des végétaux.

9. Utilisation des combinaisons de substances actives selon les revendications 1 à 3 pour combattre des champignons.

10. Procédé de préparation de fongicides, caractérisé en ce qu'on mélange une combinaison de substances actives selon les revendications 1 à 3 avec des agents d'allongement et/ou avec des agents tensioactifs.